# EUROPÄISCHE PATENTANMELDUNG

(11) **EP 1 748 209 A1**
(43) Veröffentlichungstag der Anmeldung: **31.01.2007**
(21) Anmeldenummer: 06015306.1
(22) Anmeldetag: 22.07.2006
(51) Int. Cl.: F16D 51/18, F16D 65/08

(54) **Bremsbacke für eine Fahrzeug-Trommelbremse**

(30) Priorität: 28.07.2005 DE 102005036028
(71) Anmelder: BPW Bergische Achsen KG, 51674 Wiehl (DE)
(72) Erfinder: Schmidt, Hartmut, 51588 Nümbrecht (DE); Biegale, Achim, 51588 Nümbrecht (DE)
(74) Vertreter: Christophersen, Ulrich Rudolf

(57) **Zusammenfassung**

Vorgeschlagen wird eine Bremsbacke für eine Fahrzeug-Trommelbremse mit einem kreissegmentförmig gebogenen Belagträger (1), mindestens einem innenseitig an dem Belagträger (1) befestigten und im Wesentlichen rechtwinklig zu dem Belagträger (1) angeordneten Steg (3), sowie im Bereich der Enden des Steges (3) angeordneten Abstützelementen (15, 20) zur Einleitung der Bremskräfte in die Bremsbacke. Um eine solche Bremsbacke hinsichtlich ihres Widerstandsmomentes gegenüber Kräften zu verbessern, ist der Steg (3) mit einer Einsenkung (35) senkrecht zu seiner Grundebene (25) versehen, wobei sich die Einsenkung (35) längs des gebogenen Verlaufs des Steges (3) erstreckt.

## Beschreibung

Die vorliegende Erfindung betrifft eine Bremsbacke für eine Fahrzeug-Trommelbremse mit einem segmentförmig gebogenen Belagträger, mindestens einem innenseitig an dem Belagträger befestigten und im Wesentlichen rechtwinklig zu dem Belagträger angeordneten Steg, sowie im Bereich der Enden des Steges angeordneten Abstützelementen zur Einleitung der Bremskräfte in die Bremsbacke.

Derartig gestaltete Bremsbacken zur Verwendung in Fahrzeug-Trommelbremsen sind bekannt, z.B. aus der US 2,004,062 oder der DE 196 49 487 C2.

Aufgabe der Erfindung ist es, eine derartige Bremsbacke hinsichtlich ihres Gewichtes und ihres Widerstandsmomentes gegenüber den beim Bremsvorgang in der Bremsbacke auftretenden Kräften zu verbessern.

Zur Lösung der Aufgabe ist eine Bremsbacke der eingangs genannten Art dadurch weitergebildet, dass der Steg mit einer Einsenkung senkrecht zu seiner Grundebene versehen ist, und dass sich die Einsenkung längs des gebogenen Verlaufs des Steges erstreckt.

Vorzugsweise handelt es sich bei der Einsenkung um eine Sicke. Deren Breite sollte zwischen 20 % und 80 % der Breite des Steges betragen.

Vorgeschlagen wird, dass über die gesamte Länge der Sicke deren Abstand zum Innenrand des Steges geringer ist, als der Abstand zum Belagträger.

Ferner vorgeschlagen wird, dass die Breite der Sicke über ihre Länge gleichbleibend ist.

Ferner vorgeschlagen wird, dass die Tiefe der Einsenkung bzw. Sicke gleich oder größer der Materialdicke des Steges ist.

Ferner vorgeschlagen wird, dass sich der Steg aus einem in der Grundebene verlaufenden Hauptlängsabschnitt, sowie einem hierzu parallel versetzt verlaufenden, kurzen Endabschnitt zusammensetzt, wobei die Verkröpfung der beiden Abschnitte durch einen Übergangsabschnitt erfolgt, und sich die Einsenkung durchgehend von dem Hauptlängsabschnitt bis mindestens in den Übergangsabschnitt hinein erstreckt.

Nachfolgend wird eine Bremsbacke für eine Fahrzeug-Trommelbremse in zwei Ausführungsformen anhand der zugehörigen Zeichnungen erläutert. Darin zeigen:
- Fig. 1: eine Bremsbacke zur Verwendung in einer Fahrzeug-Trommelbremse in einer teilweise geschnittenen Seitenansicht, wobei der Schnitt durch den Belagträger der Bremsbacke mit dem darauf befestigten Reibbelag gelegt ist;
- Fig. 2: eine perspektivische Ansicht der Bremsbacke nach Fig. 1;
- Fig. 3: eine Ansicht der Bremsbacke von ihrer Innenseite her;
- Fig. 4: in einer zweiten Ausführungsform eine Bremsbacke zur Verwendung in einer Fahrzeug-Trommelbremse in einer teilweise geschnittenen Seitenansicht, wobei der Schnitt durch den Belagträger der Bremsbacke mit dem darauf befestigten Reibbelag gelegt ist und
- Fig. 5: eine perspektivische Ansicht der Bremsbacke nach Fig. 4.

Die auf der Zeichnung in zwei Ausführungsformen dargestellten und im Folgenden im Einzelnen erläuterten Bremsbacken für eine Nutzfahrzeug-Trommelbremse sind hinsichtlich ihres Gewichtes sowie ihres Widerstandsmomentes gegenüber den beim Bremsvorgang in der Bremsbacke wirkenden Kräften verbessert. Sie können ferner ein günstigeres Geräuschverhalten zeigen als herkömmliche Bremsbacken.

Im Wesentlichen besteht die Bremsbacke aus einem aus einer Platte kreissegmentförmig gebogenen Belagträger 1, auf welchem außenseitig der Reibbelag vernietet ist, sowie zwei innenseitig an dem Belagträger 1 befestigten und im Wesentlichen im Rechten Winkel zu dem Belagträger 1 angeordneten Stegen 3. Auch die Stege 3 zeigen daher einen gebogenen oder sichelförmigen Verlauf entsprechend der Biegung des Belagträgers. Da der Belag 2 auf dem Träger 1 vernietet ist, lässt er sich nach vollständigem Verschleiß separat austauschen und durch einen neuen Belag ersetzen. Die Bremsbacke im übrigen ist daher weiterverwendbar.

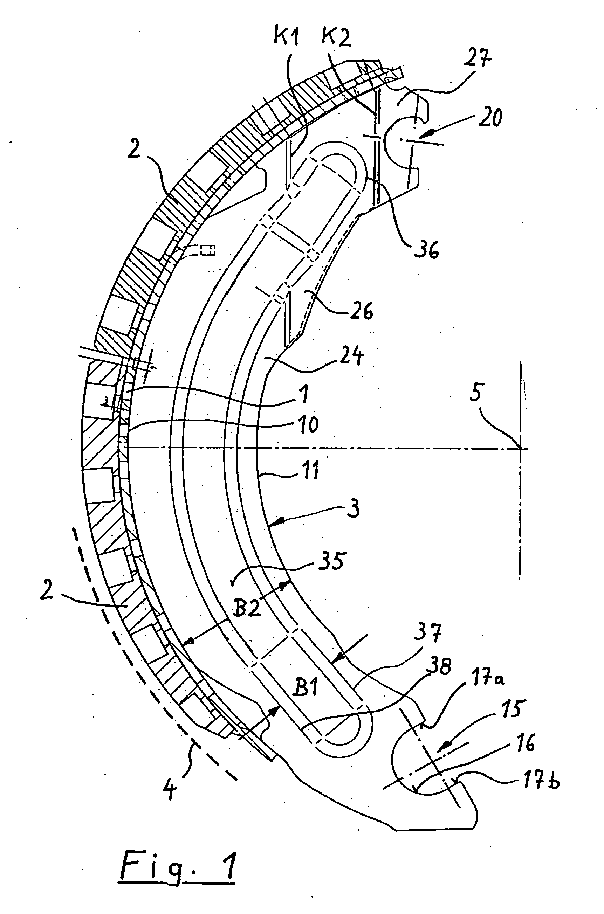

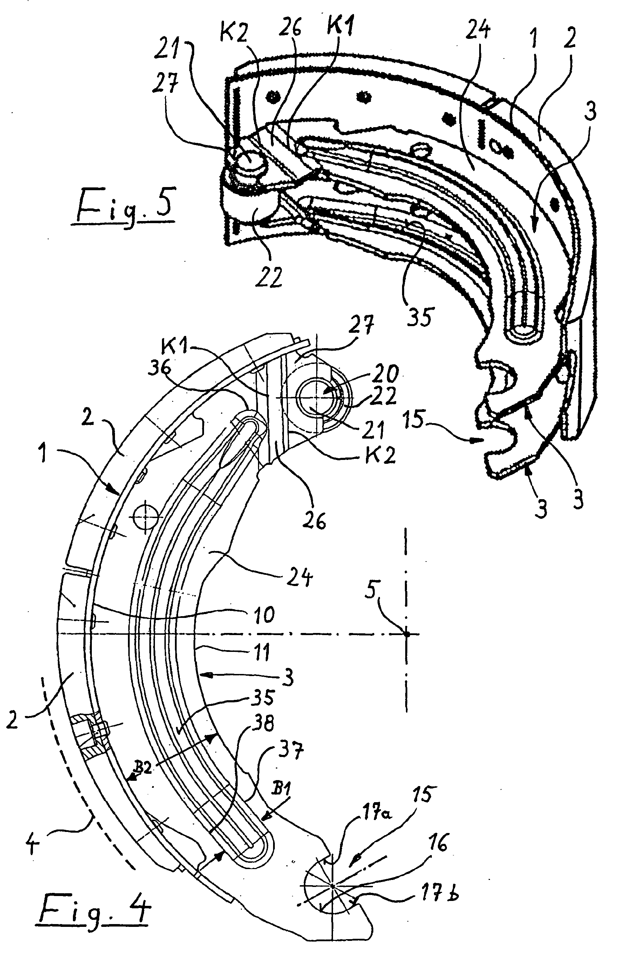

Der Belagträger 1 besteht wie üblich aus einer gebogenen Metallplatte. Darauf angeordnet ist der Reibbelag 2. Beim Bremsvorgang legt sich der Reibbelag 2 gegen die in den Fign. 1 und 4 nur gestrichelt angedeutete Bremstrommel 4, zu der ferner auch die Bremstrommelachse 5 in Fig. 1 und Fig. 4 eingetragen ist.

Auch bei den beiden Stegen 3 handelt es sich um Platten aus Metallblech, welche entsprechend der Kreissegmentform des Belagträgers 1 sichelförmig gestaltet sind. Die Außenkante 10 der Stege 3 ist in geeigneter Weise mit der Innenseite des Belagträgers 1 verbunden, etwa durch Verschweißen oder Verlöten. Die Innenkante 11 der Stege 3 geht im Bereich der beiden Enden der Stege 3 in Konturen über, die eine Abstützfunktion bei der Übertragung der Bremskräfte übernehmen. Dies sind am einen, in Figur 1 unten dargestellten Ende der beiden Stege 3 Halbschalen 15, mit denen die Bremsbacke sich an einem feststehenden Bolzen der Trommelbremse abstützt. Die Halbschale 15 besteht aus einer halbkreisförmigen Lageröffnung 16 sowie aus an beiden Enden an die Lageröffnung 16 anschließenden, relativ kurzen Parallelbereichen 17a, 17b. Im Betrieb stützt sich die Bremsbacke mit der halbkreisförmigen Lageröffnung 16 an dem feststehenden Bolzen des Bremsblechs ab, um so die Brems-Reaktionskräfte aufzunehmen. Auch an dem anderen Ende der beiden Stege 3 sind in Verlängerung der Innenkante 11 Öffnungen 20 ausgebildet. Die Öffnung 20 weist, wie Figur 1 erkennen lässt, einen Umschlingungswinkel von etwas mehr als 180° auf, und nimmt in montiertem Zustand der Trommelbremse den in Fig. 4 und Fig. 5 zusätzlich dargestellten Bremsbolzen 21 einer Bremsrolle 22 auf. Mit dieser Bremsrolle 22 stützt sich die Bremsbacke gegen das Spreizelement der Trommelbremse. Dieses Spreizelement ist z.B. ein Nocken.

Jeder der beiden sichelförmig gestalteten Stege 3 setzt sich aus insgesamt drei Längsabschnitten zusammen. Der größte Teil der Länge wird von einem Hauptlängsabschnitt 24 eingenommen, der auch die Grundebene 25 des jeweiligen Steges 3 definiert. In Richtung des einen Endes der Bremsbacke, und zwar des die Öffnung 20 für den Bolzen 21 der Bremsrolle 22 aufweisenden Endes, ist der Steg 3 verkröpft. Hierzu schließt sich jeweils an den Hauptlängsabschnitt 24 ein hierzu angewinkelter Übergangsabschnitt 26 an. Zwischen Hauptlängsabschnitt 24 und Übergangsabschnitt 26 befindet sich daher im Blechmaterial des Steges 3 ein Knick K1.

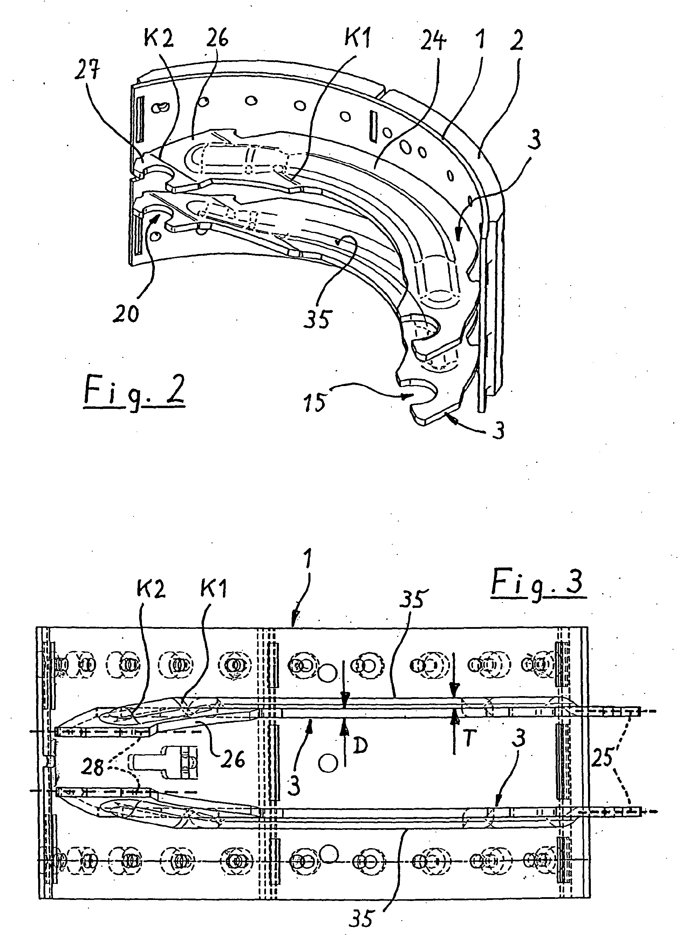

An die schrägen Übergangsabschnitte 26 der Stege wiederum schließen sich wiederum parallele Endabschnitte 27 an, wobei sich auch zwischen Übergangsabschnitt 26 und Endabschnitt 27 ein Knick K2 befindet. Der Endabschnitt 27 befindet sich nicht in der Grundebene 25 des Steges, sondern in einer hierzu parallelen Ebene 28 (Fig. 3). Der Endabschnitt 27 ist sehr kurz gestaltet, da sich der Knick K2 des Übergangsabschnitts 26 bis nahezu an die Öffnung 20 heran erstreckt.

Zur Erhöhung der Festigkeit und insbesondere des Widerstandsmomentes des jeweiligen Steges bei zugleich geringem Gewicht ist jeder Steg 3 mit einer als längliche Sicke gestalteten Einsenkung 35 versehen. Figur 1 lässt erkennen, dass die Einsenkung 35 in etwa die Gestalt einer Sichel oder auch eines Bumerangs aufweist, und sich über nahezu die gesamte Länge des Steges 3 erstreckt. Hergestellt ist die Einsenkung 35 durch Kaltverformen des Blechmaterials, aus dem der Steg 3 besteht.

Ferner lassen die Figuren 4 und 1 erkennen, dass sich die Einsenkung bzw. Sicke 35 nicht nur über den Hauptlängsabschnitt 24 des Steges 3 erstreckt, sondern bis an den Übergangsabschnitt 26 heran oder sogar in den Übergangsabschnitt 26 hinein, und damit in den Bereich der Verkröpfung des Steges nahe der Öffnung 20. Das dortige Ende 36 der Sicke 35 befindet sich bei der Ausführungsform nach Fig. 1 geringfügig vor jenem zweiten Knick K2, welcher den Übergang zwischen der Verkröpfung und dem Endabschnitt 27 definiert. Die durch Form und Lage der Einsenkung 35 erreichte Versteifung des Steges erfasst daher auch den Bereich der Verkröpfung, so dass auch dort eine höhere Festigkeit bzw. ein erhöhtes Widerstandsmoment des Steges erreicht wird. Zur Herstellung des Steges 3 lassen sich zudem dünnere Bleche der Materialdicke D (Fig. 3) verwenden, wobei in Folge der Versteifung durch die Sicke 35 mindestens dieselbe Festigkeit gegenüber Widerstandsmomenten erreicht wird, wie bei einem Steg mit größerer Materialdicke.

Um die gewünschte formbedingte Festigkeitssteigerung des Steges 3 zu erzielen, muss die Tiefe der Einsenkung 35 ausreichend sein. Wie vor allem Figur 3 erkennen lässt, sollte die Tiefe T des Bodens der Einsenkung 35 gleich oder größer der Materialdicke D des Steges 3 sein. Die Einsenkung bzw. Sicke 35 befindet sich jeweils auf der Außenseite des Steges, d.h. auf der dem jeweils anderen Steg abgewandten Seite.

Die Fign. 1 und 4 lassen erkennen, dass Innenrand 37 und Außenrand 38 der Sicke 35 parallel zueinander verlaufen. Im Hinblick auf die Kaltverformung des Steges zur Herstellung der Sicke sollte die Breite B1 der Sicke 35 zwischen 20 % und 80 % der Breite B2 des Steges 3 betragen. Der Abstand der Sicke 35 zur Innenkante 11 des Steges 3 ist geringer als ihr Abstand zur Außenkante 10 und damit zum Belagträger. Diese eher nach innen hin versetzte Anordnung der Einsenkung führt zu einem höheren Widerstandsmoment gegen ein Verbiegen der Bremsbacke während des Bremsens.

### Bezugszeichenliste

- 1: Belagträger
- 2: Reibbelag
- 3: Steg
- 4: Bremstrommel (Bremsfläche)
- 5: Bremstrommelachse
- 10: Außenkante
- 11: Innenkante
- 15: Halbschale
- 16: halbkreisförmige Lageröffnung
- 17a: Parallelbereich
- 17b: Parallelbereich
- 20: Öffnung
- 21: Bremsbolzen
- 22: Bremsrolle
- 24: Hauptlängsabschnitt
- 25: Grundebene
- 26: Übergangsabschnitt
- 27: Endabschnitt
- 28: Ebene des Endabschnitts
- 35: Einsenkung, Sicke
- 36: Ende der Einsenkung
- 37: Innenrand der Einsenkung
- 38: Außenrand der Einsenkung
- B1: Breite
- B2: Breite
- D: Materialdicke
- K1: Knick
- K2: Knick
- T: Tiefe

## Patentansprüche

1. Bremsbacke für eine Fahrzeug-Trommelbremse mit einem segmentförmig gebogenen Belagträger (1), mindestens einem innenseitig an dem Belagträger (1) befestigten und im Wesentlichen rechtwinklig zu dem Belagträger (1) angeordneten Steg (3), sowie im Bereich der Enden des Steges (3) angeordneten Abstützelementen (15, 20) zur Einleitung der Bremskräfte in die Bremsbacke,
**dadurch gekennzeichnet,**
**dass** der Steg (3) mit einer Einsenkung (35) senkrecht zu seiner Grundebene (25) versehen ist, und dass sich die Einsenkung (35) längs des gebogenen Verlaufs des Steges (3) erstreckt.

2. Bremsbacke nach Anspruch 1.,
**dadurch gekennzeichnet,**
**dass** die Einsenkung (35) eine Sicke ist.

3. Bremsbacke nach Anspruch 2.,
**dadurch gekennzeichnet,**
**dass** die Breite (B1) der Sicke (35) zwischen 20 % und 80 % der Breite (B2) des Steges (3) beträgt.

4. Bremsbacke nach Anspruch 2. oder Anspruch 3.,
**dadurch gekennzeichnet,**
**dass** über die gesamte Länge der Sicke (35) deren Abstand zum Innenrand (11) des Steges (3) geringer ist, als der Abstand zum Belagträger (1).

5. Bremsbacke nach einem der vorangehenden Ansprüche,
**dadurch gekennzeichnet,**
**dass** die Breite (B1) der Sicke (35) über ihre Länge gleichbleibend ist.

6. Bremsbacke nach einem der vorangehenden Ansprüche,
**dadurch gekennzeichnet,**
**dass** die Tiefe (T) der Einsenkung bzw. Sicke (35) gleich oder größer ist als die Materialdicke (D) des Steges (3).

7. Bremsbacke nach einem der vorangehenden Ansprüche,
**dadurch gekennzeichnet,**
**dass** sich der Steg (3) aus einem in der Grundebene (25) verlaufenden Hauptlängsabschnitt (24), sowie einem hierzu parallel versetzt verlaufenden, kurzen Endabschnitt (27) zusammensetzt, wobei die Verkröpfung der beiden Abschnitte (24, 27) durch einen Übergangsabschnitt (26) erfolgt, und sich die Einsenkung (35) durchgehend von dem Hauptlängsabschnitt (24) bis mindestens in den Übergangsabschnitt (26) hinein erstreckt.
